# EUROPÄISCHE PATENTSCHRIFT

(11) **EP 3 555 463 B1**
(45) Veröffentlichungstag und Bekanntmachung des Hinweises auf die Patenterteilung: **01.07.2020**
(21) Anmeldenummer: 17832935.5
(22) Anmeldetag: 13.12.2017
(51) Int. Cl.: F03D 7/02, F03D 7/04, F03D 9/22, F03D 9/25, F03D 80/60

(54) **VERFAHREN UND VORRICHTUNG ZUM BETREIBEN VON WINDENERGIEANLAGEN**
METHOD AND DEVICE FOR OPERATING WIND TURBINES
PROCÉDÉ ET DISPOSITIF DE COMMANDE D'ÉOLIENNES

(30) Priorität: 13.12.2016 DE 102016124135
(43) Veröffentlichungstag der Anmeldung: 23.10.2019
(73) Patentinhaber: Wobben Properties GmbH, 26607 Aurich (DE)
(72) Erfinder: DE BOER, Wolfgang, 26802 Moormerland (DE)
(74) Vertreter: Eisenführ Speiser
(86) Internationale Anmeldenummer: PCT/EP2017/082543
(87) Internationale Veröffentlichungsnummer: WO 2018/108974

(56) Entgegenhaltungen:
- DE-A1-102013 222 452
- DE-A1-102014 206 884
- US-A1- 2016 025 069

## Beschreibung

Die Erfindung betrifft den Betrieb von Windenergieanlagen eines Windparks, insbesondere in einem Leistungsbegrenzungsmodus. Ein Leistungsbegrenzungsmodus entspricht hierbei einer Betriebsart der Windenergieanlagen, bei dem nur eine sehr geringe oder gar keine elektrische Leistung in ein mit den Windenergieanlagen verbundenes Versorgungsnetz eingespeist werden soll.

Neben herkömmlichen Großkraftwerken, die elektrische Energie beispielsweise mittels fossiler Brennstoffe bereitstellen und zur Sicherung der Grundlast dienen, werden heutzutage immer mehr Windenergieanlagen mit einem Versorgungsnetz verbunden, um gemeinsam elektrische Leistung in das Versorgungsnetz einzuspeisen. Windenergieanlagen dienen häufig, wie auch Gas-, Wasser- und Solarkraftwerke, zur Bereitstellung der Mittel- und Spitzenlasten im Versorgungsnetz.

Ein Grund für den vermehrten Einsatz von Windenergieanlagen ist, dass Windenergieanlagen gegenüber herkömmlichen Kraftwerken den Vorteil aufweisen, dass die einzuspeisende elektrische Leistung besonders flexibel innerhalb sehr kurzer Zeiträume im Hinblick auf ihre Parameter an den Bedarf der mit dem Versorgungsnetz verbundenen Verbraucher angepasst werden kann. Demgegenüber ist beispielsweise der Vorgang des Erhöhens oder Absenkens einzuspeisender elektrischer Leistung durch herkömmliche Großkraftwerke sehr träge. Eine Anpassung, also eine Erhöhung oder Absenkung, der einzuspeisenden Leistung kann bei Großkraftwerken viele Stunden dauern.

Die steigende Anzahl von Windenergieanlagen, um eine hohe Flexibilität zu gewährleisten, führt jedoch auch immer häufiger zu längerfristigen Begrenzungen der einzuspeisenden elektrischen Leistung einzelner Windenergieanlagen, da die gesamte Menge der von den Windenergieanlagen in ihrer Gesamtheit zur Verfügung gestellten elektrischen Energie nicht durch die Verbraucher abgenommen werden kann. Nicht selten wird die einzuspeisende elektrische Leistung der Windenergieanlagen dabei für mehrere Stunden oder gar Tage begrenzt, sodass diese sehr wenig oder gar keine Energie mehr in ein Versorgungsnetz einspeisen dürfen. Hierzu werden üblicherweise vom Netzbetreiber Sollwerte für einen Windpark oder einzelne Windenergieanlagen zur Verfügung gestellt und über eine Datenkommunikationsleitung an den Windpark oder an einzelne Windenergieanlagen übertragen.

Im Falle, dass ein Netzbetreiber einen Sollwert, der auch Leistungssollwert genannt werden kann, an einen Windpark überträgt, der beispielsweise vorschreibt, dass der Windpark keine elektrische Leistung mehr in das mit dem Windpark verbundene Versorgungsnetz einspeisen soll, hat ein Windparkbetreiber für den Fall, dass weiterhin elektrische Leistung in das Versorgungsnetz eingespeist wird, sogar "Strafzahlungen" anstatt einer Gutschrift für die trotzdem eingespeiste Leistung zu zahlen. Daher ist es aus Sicht des Windparkbetreibers wünschenswert, die vorgegebenen Sollwertvorgaben möglichst genau einzuhalten.

Im Falle, dass nun ein Windpark nur noch sehr wenig oder gar keine Energie mehr in das mit dem Windpark verbundene Versorgungsnetz einspeisen darf, trudeln die einzelnen Windenergieanlagen bei geringer Drehzahl, wobei gegebenenfalls nur noch die Eigenerregung des Generators aufrechterhalten wird. Im Falle, dass dieser Zustand der einzelnen Windenergieanlagen über mehrere Stunden oder Tage andauert, besteht insbesondere bei ungünstigen klimatischen Bedingungen, zum Beispiel während eines Sturms und/oder hoher Luftfeuchtigkeit, die Gefahr, dass die elektronischen Bauteile der Windenergieanlage, wie beispielsweise der Generator oder die Umrichter feucht bzw. sogar nass werden. Neben normalen Korrosionsschäden, die hierdurch entstehen können, besteht auch die Gefahr, dass es im Falle, dass die Leistung binnen kürzester Zeit wieder erhöht werden soll, zu Schäden am Generator und den Umrichtern kommt, da hohe Ströme und Spannungen an den feuchten bzw. nassen Bauteilen anliegen und gegebenenfalls die Voraussetzungen für eine einwandfreie Isolierung nicht mehr gegeben sind. In diesem Fall können demnach Schäden entstehen, durch die der gesamte Betrieb der Windenergieanlage bis zu einer Reparatur eingestellt werden muss. Ein vorübergehender Totalausfall wäre somit die Folge.

Zur Vermeidung von Schäden durch Feuchtigkeit oder Nässe sind Heizvorrichtungen bekannt, die im Bereich der elektronischen Teile einer Windenergieanlage angeordnet sind und im Falle, dass diese nur sehr wenig oder keine Energie erzeugt, die elektronischen Teile vordem Feucht- oder Nasswerden schützen. Aus Dokument DE 10 2014 206 884 A1 ist eine Windenergieanlage bekannt, die Energie in ein elektrisches Versorgungsnetz einspeist und die Einrichtungen aufweist, um die Windenergieanlage zu beheizen. Zum Betreiben dieser Heizelemente wird häufig sogar Energie aus dem Versorgungsnetz entnommen, für die dann vom Anlagenbetreiber gezahlt werden muss. Auch derartige Zahlungen sind unerwünscht.

Aufgabe der vorliegenden Erfindung ist es daher, einen Windpark im Falle, dass dieser nur sehr wenig oder keine Leistung in ein Versorgungsnetz einspeisen soll, so zu betreiben, dass dieser möglichst keine oder zumindest sehr wenig Leistung in das Versorgungsnetz einspeist und dass dieser auch keine oder nur sehr wenig Leistung aus dem Versorgungsnetz entnimmt. Außerdem soll verhindert werden, dass die elektrischen Komponenten der Windenergieanlagen des Windparks feucht oder nass werden.

Das Deutsche Patent- und Markenamt hat in der Prioritätsanmeldung zu vorliegender Anmeldung den folgenden Stand der Technik recherchiert: DE 10 2015 201 431 A1.

Dazu betrifft die Erfindung ein Verfahren zum Betreiben von Windenergieanlagen, insbesondere desselben Windparks, in einem Leistungsbegrenzungsmodus. Hierbei umfasst der Leistungsbegrenzungsmodus zunächst ein Abschalten mindestens einer der Windenergieanlagen und Betreiben mindestens einer von der abgeschalteten Windenergieanlage unterschiedlichen Windenergieanlage. Das Betreiben einer Windenergieanlage bedeutet hier, dass die Windenergieanlage elektrische Energie bereitstellt. Das Abschalten einer Windenergieanlage bedeutet, dass diese keine elektrische Energie bereitstellt, also aus kinetischer Windenergie erzeugt. Dennoch bedeutet das Abschalten nicht, dass der Rotor und der Generator gestoppt sind. Vorzugsweise drehen diese sich auch im abgeschalteten Zustand der Windenergieanlage.

Gemäß der Erfindung wird außerdem eine Generatorheizung der abgeschalteten Windenergieanlage aktiviert. Zudem wird bei oder nach dem Auftreten eines vordefinierten Ereignisses die betriebene Windenergieanlage abgeschaltet. Außerdem wird die Generatorheizung der bei oder nach dem Auftreten eines vordefinierten Ereignisses abgeschalteten Windenergieanlagen aktiviert.

Der Erfindung liegt hierbei die Erkenntnis zugrunde, dass eine Windenergieanlage, die lediglich zum Bereitstellen von Energie für das Beheizen einer anderen Windenergieanlage betrieben wird, durch diesen Betrieb selbst so wenig Wärme erzeugt, dass diese nicht ausreicht, um Feuchtigkeitsablagerungen bzw. Nässe im Bereich der elektronischen Bauteile zu vermeiden. Ein Heizen einer sich im Betrieb befindenden Windenergieanlage ist jedoch mit einer Generatorheizung nicht möglich, da durch die Verschaltung des Generators, um diesen als Heizung einsetzen zu können, keine Erzeugung elektrischer Energie mehr möglich ist.

Durch Abschalten der Windenergieanlage, die zuvor die Energie für die Generatorheizung einer anderen Windenergieanlage bereitgestellt hat, ist nun ein Heizen dieser Windenergieanlage, die zuvor die Energie bereitgestellt hat, möglich. Die Energieversorgung der Generatorheizung wird dann von einer anderen Windenergieanlage übernommen, die vorzugsweise zuvor beheizt wurde und daher trocken und frei von Feuchtigkeit ist.

Hierbei ist das vordefinierte Ereignis vorzugsweise ein Ablauf einer vordefinierten Zeitdauer oder ein Erreichen eines vordefinierten Zeitpunktes. Im Grunde genommen werden also die Windenergieanlagen der Reihe nach für eine bestimmte Zeit beheizt, um danach für eine bestimmte Zeit betrieben zu werden, um eine geringe Energie zum Heizen anderer Windenergieanlagen bereitzustellen. Bevor dann jedoch die Gefahr der Feuchtigkeit entsteht, werden die betriebenen Anlagen wieder abgeschaltet und geheizt.

Gemäß einer weiteren Alternative ist das vordefinierte Ereignis mindestens ein vordefinierter Sensorwert mindestens eines vordefinierten Sensors. Der Sensor ist beispielsweise am Generator angeordnet und als Feuchtigkeitssensor und/oder Temperatursensor ausgestaltet. Wird demnach zum Beispiel mit dem Sensor die Gefahr der Feuchtigkeit des Generators durch Auftreten vordefinierter Feuchtigkeitswerte detektiert, so wird die betriebene Windenergieanlage abgeschaltet und mit der Generatorheizung beheizt.

Beschädigungen von Windenergieanlagen durch Nässe oder Feuchtigkeit wird somit weitestgehend entgegengewirkt. Gleichzeitig wird einerseits keine Energie zum Beheizen aus dem Versorgungsnetz entnommen, da ja bereits wenigstens eine Windenergieanlage diese Energie zum Beheizen zur Verfügung stellt. Andererseits wird auch keine Energie in das Versorgungsnetz eingespeist, da die Windenergieanlagen, die die Energie zum Beheizen zur Verfügung stellen, in einem Betriebspunkt betrieben werden, in dem lediglich die Energie produziert wird, die tatsächlich zum Beheizen innerhalb des Windparks benötigt wird. Insbesondere wird also durch das erfindungsgemäße abwechselnde Ein- und Abschalten der einzelnen Windenergieanlagen der Entwicklung von Feuchtigkeit in einzelnen Anlagen entgegengewirkt.

Gemäß einer ersten Ausführungsform wird der Leistungsbegrenzungsmodus verzögert oder sofort ausgeführt, sobald Sollwertvorgaben für die vom Windpark einzuspeisende Leistung in ein Versorgungsnetz auf oder unterhalb eines vordefinierten Schwellenwerts liegen oder fallen. Demnach wird also der erfindungsgemäße Leistungsbegrenzungsmodus, bei dem die Windenergieanlagen abwechselnd zwischen einem Zustand hin- und hergeschaltet werden, bei dem einerseits eine Generatorheizung aktiviert ist, um die Windenergieanlage zu beheizen und von Feuchtigkeit freizuhalten, und andererseits die Windenergieanlage Energie erzeugt, um Generatorheizungen anderer Windenergieanlagen zu versorgen, verzögert oder sofort ausgeführt, wenn Sollwertvorgaben auf oder unterhalb des vordefinierten Schwellenwerts liegen oder fallen.

Vorteilhaft ist am verzögerten Ausführen des Leistungsbegrenzungsmodus, dass im Falle, dass die Sollwertvorgaben nur für einen kurzen Zeitraum auf oder unterhalb den Schwellenwert fallen und somit bereits nach kurzer Zeit wieder eine höhere Leistungsabgabe des Windparks gefordert wird, der ganze Windpark nicht wieder aus dem erst kurz aktivierten Leistungsbegrenzungsmodus in den Normalbetrieb zurück überführt werden muss. Hierbei wird dann in Kauf genommen, dass kurzzeitig geringe Mengen elektrischer Leistung in ein Versorgungsnetz eingespeist werden, für das Zahlungen vom Betreiber erfolgen müssen, wobei jedoch ein Neustarten der Windenergieanlagen, um vom Leistungsbegrenzungsmodus in einen Normalbetrieb zu gelangen, das ebenfalls mit einer gewissen Leistungsentnahme aus dem Versorgungsnetz verbunden ist, entfällt. Wird der Leistungsbegrenzungsmodus jedoch gemäß der Alternative sofort ausgeführt, bringt dies den Vorteil, dass keine Kosten für "zu viel" in das Versorgungsnetz eingespeiste Energie entstehen.

Gemäß einer weiteren Ausführungsform entspricht der Schwellenwert einem Wert von weniger als 5 % oder weniger als 2,5 % der Nennleistung des Windparks, zum Beispiel 0 Kilowatt. Demnach ist der Schwellenwert als sehr kleiner oder geringer Wert gewählt, um zu verhindern, dass die Windenergieanlagen in einen Leistungsbegrenzungsmodus übergehen, obwohl ihr Betrieb selbst gegebenenfalls noch genügend Wärme erzeugen würde und somit für ein Aufheizen und damit Freihalten von Feuchtigkeit ausreichend wäre. Ein unnötiges Übergehen in den Leistungsbegrenzungsmodus kann dadurch verhindert werden.

Gemäß einer weiteren Ausführungsform wird im Leistungsbegrenzungsmodus ein Anteil oder die gesamte überschüssige Energie im Windpark, also innerhalb des Windparks, vorzugsweise mit einem zusätzlichen Verbraucher des Windparks, verbraucht. Diese überschüssige Energie umfasst die elektrische Energie, also die Menge an elektrischer Energie, die von einer oder mehreren betriebenen Windenergieanlagen im Leistungsbegrenzungsmodus erzeugt wird und die nicht benötigt wird, um eine oder mehrere Generatorheizungen der aktivierten Generatorheizungen zu versorgen.

Hierdurch kann gewährleistet werden, dass auch im Falle, dass eine oder mehrere der Windenergieanlagen mehr Energie erzeugen als sie durch die Generatorheizungen verbraucht werden kann, diese überschüssige Energie nicht in das Netz eingespeist werden muss, wenn ein Netzbetreiber fordert, dass zurzeit weniger oder keine Energie eingespeist wird.

Gemäß einer weiteren Ausführungsform wird eine Menge an elektrischer Energie für die einzuspeisende elektrische Leistung des Windparks vorgegeben, wobei dies durch eine Sollwertvorgabe erfolgt. Weiter wird gemäß dieser Ausführungsform die Menge an Energie im Windpark, insbesondere mit einem zusätzlichen Verbraucher des Windparks, verbraucht, die dem Anteil der überschüssigen Energie entspricht, der oberhalb der durch die Sollwertvorgabe definierten Menge an elektrischer Energie liegt.

Demnach ist es also möglich, exakt die vom Betreiber über eine Sollwertvorgabe definierte Menge an elektrischer Energie in ein Netz durch den Windpark einzuspeisen, auch wenn diese Menge nur sehr gering ist.

Gemäß einer weiteren Ausführungsform wird die überschüssige Energie in einem zusätzlichen Verbraucher verbraucht. Ein Verbraucher umfasst gemäß unterschiedlichen Ausführungsformen beispielsweise einen oder mehrere Aktoren, nämlich zum Beispiel ein oder mehrere Rotorblattverstellantriebe und/oder ein oder mehrere Azimutantriebe einer oder mehrerer Windenergieanlagen. Alternativ oder zusätzlich umfasst der Verbraucher mindestens eine Heizvorrichtung, nämlich zum Beispiel mindestens eine Blattheizung einer oder mehrerer Windenergieanlagen. Weiterhin kann mindestens ein Akkumulator als Verbraucher im Windpark als Alternative oder zusätzlich zu den zuvor genannten Verbrauchern vorgesehen sein. Zusätzlich oder alternativ umfasst der Verbraucher eine Chopperschaltung einer Windenergieanlage oder mehrere Chopperschaltungen mehrerer Windenergieanlagen, die vorzugsweise in bzw. jeweils in einem Zwischenkreis der Windenergieanlage bzw. der Windenergieanlagen angeordnet sind. Zusätzlich oder alternativ umfasst der Verbraucher mindestens einen Umrichter einer nicht betriebenen Windenergieanlage, der gegenphasig zu mindestens einem Umrichter einer Windenergieanlage, die betrieben wird, betrieben wird.

Derartige Verbraucher eignen sich vorteilhafterweise, um eine genau definierte Menge überschüssiger Energie, die gerade nicht in ein Netz eingespeist werden soll, zu verbrauchen. Überwiegend sind die genannten Verbraucher bereits in einem Windpark vorhanden und können direkt genutzt werden.

Gemäß einer weiteren Ausführungsform wird der Schwellenwert von einem Errichter und/oder Betreiber eingestellt oder ist von einem Errichter und/oder Betreiber einstellbar.

Werden demnach die Windenergieanlagen eines Windparks errichtet, kann bereits auf Basis für den Standort vorherrschender spezifischer Wetterverhältnisse ein geeigneter Schwellenwert vom Errichter vorgegeben werden. Dieser kann später im Betrieb vom Betreiber vorzugsweise auch nachjustiert werden.

Somit ist in Abhängigkeit standortspezifischer Wetterverhältnisse eine Anpassung des Schwellenwerts möglich. Beispielsweise in trockenen, warmen Gebieten ist der Leistungsbegrenzungsmodus gegebenenfalls gar nicht nötig, während in kalten, feuchten Gebieten die Notwendigkeit des Aufheizens einer Windenergieanlage sogar schon dann nötig ist, wenn diese beispielsweise in einem Betrieb betrieben wird, bei dem noch 5 % der Nennleistung der Windenergieanlage erzeugt werden.

Gemäß diesem Ausführungsbeispiel ist zusätzlich oder alternativ der Schwellenwert automatisch in Abhängigkeit vorherrschender und/oder prognostizierter Wetterdaten automatisch einstellbar. Demnach wird der Schwellenwert beispielsweise abhängig von mit einer Wetterstation empfangenen Wetterdaten im Falle höherer Feuchtigkeit erhöht und im Falle geringerer Feuchtigkeit abgesenkt. Hierdurch wird gewährleistet, dass der Leistungsbegrenzungsmodus tatsächlich nur in den Fällen aktiviert wird, in denen er auch benötigt wird.

Gemäß einer weiteren Ausführungsform wird der Leistungsbegrenzungsmodus in Abhängigkeit von mit mindestens einem Sensor gemessenen Werten für die Luftfeuchtigkeit und/oder die Temperatur aktiviert und/oder deaktiviert. Werden demnach Werte, die ein Betauungsrisiko des Generators darstellen, detektiert und ist eine Sollwertvorgabe für die vom Windpark einzuspeisende Leistung in ein Versorgungsnetz auf oder unterhalb eines vordefinierten Schwellenwerts festgelegt, wird der Leistungsbegrenzungsmodus aktiviert. Gemäß einer weiteren Ausführungsform wird der Leistungsbegrenzungsmodus verzögert nach Ablauf einer vordefinierten Wartezeit ausgeführt. Die Wartezeit beginnt zu laufen, nachdem die Sollwertvorgaben für die einzuspeisende Leistung auf den oder unterhalb des vordefinierten Schwellenwerts fallen. Hierdurch kann sichergestellt werden, dass zunächst die noch vorhandene Restwärme in einer zuvor betriebenen Windenergieanlage ausgenutzt wird, um die Windenergieanlage vor Feuchtigkeit zu schützen, wenn diese nach dem Betrieb abgeschaltet wird. Ein Heizen ist zu diesem Zeitpunkt noch nicht nötig.

Gemäß einer Ausführungsform beträgt diese Wartezeit 4 Stunden oder weniger als 4 Stunden oder vorzugsweise 2 Stunden oder weniger als 2 Stunden.

Gemäß einer weiteren Ausführungsform erzeugt eine betriebene Windenergieanlage im Leistungsbegrenzungsmodus eine elektrische Leistung von weniger als 5 %, insbesondere weniger als 2 %, zum Beispiel 1,5 %, 0,1 % oder 0 %, ihrer Nennleistung. Hierdurch wird sichergestellt, dass gegebenenfalls benötigte Energie zum Beheizen anderer Windenergieanlagen zwar zur Verfügung gestellt wird, andererseits aber sicher keine Energie in das Versorgungsnetz eingespeist wird, für die Zahlungen an den Netzbetreiber erfolgen müssen.

Gemäß einer weiteren Ausführungsform wird die aktivierte Generatorheizung einer oder mehrerer abgeschalteter Windenergieanlagen eines Windparks im Leistungsbegrenzungsmodus mit oder zumindest überwiegend mit der Energie, die von der mindestens einen betriebenen Windenergieanlage desselben Windparks bereitgestellt wird, versorgt. Es ist somit sichergestellt, dass nur wenig oder keine Energie aus dem Versorgungsnetz im Leistungsbegrenzungsmodus entnommen werden muss, für die der Windparkbetreiber zahlen müsste.

Gemäß einer weiteren Ausführungsform umfasst das Aktivieren der Generatorheizung das Kurzschließen des Generatorstators und das Beaufschlagen des Generatorläufers mit einem vorgebbaren Erregerstrom. Der Erregerstrom im Generatorläufer führt somit zu einer Erwärmung der Windungen der elektrischen Leitungen des Generatorläufers durch den Widerstand der Leitungen, wenn der Erregerstrom durch diese Leitungen geleitet wird. Außerdem führt die Erregung des Generatorläufers zur Induktion eines Stromflusses in den Generatorstator, der sich durch den Kurzschluss ebenfalls erwärmt. Diese Erwärmung führt dann zu einer Erwärmung des Generators der Windenergieanlage im Bereich der Gondel, sodass auch zumindest elektronische Bauteile, die sich im Bereich der Gondel befinden, mit erwärmt werden.

Vorzugsweise wird der Kurzschluss zum Aktivieren der Generatorheizung durch einen Kurzschluss durch die Leistungshalbleiter im Wechselrichter im Turmfuß realisiert, sodass auch die Gleichrichtereinheiten und die Wechselrichter durch den Strom erwärmt und vor Feuchtigkeit geschützt werden. Die Generatorheizung erwärmt somit die gesamte Anlage. Gemäß einer weiteren Ausführungsform wird der in den Stator induzierte Strom auf einen vorgebbaren Heizstrom geregelt.

Gemäß einer weiteren Ausführungsform wird im Leistungsbegrenzungsmodus während einem ersten Intervall der vordefinierten Zeitdauer oder bis zu einem der vordefinierten Zeitpunkte jede zweite Windenergieanlage des Windparks betrieben und die übrigen Windenergieanlagen mit der Generatorheizung beheizt. Nach Ablauf der vordefinierten Zeitdauer oder nach dem Erreichen des einen der vordefinierten Zeitpunkte findet dann ein Wechsel zwischen dem Betrieb und dem Heizen statt, sodass die zuvor betriebenen Windenergieanlagen mit der Generatorheizung beheizt und die zuvor mit der Generatorheizung beheizten Windenergieanlagen betrieben werden. Nach erneutem Ablauf der vordefinierten Zeitdauer oder nach dem Erreichen eines weiteren der vordefinierten Zeitpunkte erfolgt ein erneuter Wechsel, wobei der Wechsel zwischen dem Betrieb und dem Heizen so lange stattfindet, bis der Wert der Sollwertvorgabe für die einzuspeisende elektrische Leistung über dem vordefinierten Schwellenwert liegt.

Durch diesen vordefinierten Wechsel zwischen Normalbetrieb, der hier kurz Betrieb genannt wird, und einem Heizbetrieb, der hier kurz Beheizen oder Heizen genannt wird, ist es möglich, dass die einzelnen Windenergieanlagen eines Windparks nicht miteinander kommunizieren müssen. Vielmehr können die Windenergieanlagen autark anhand der festgelegten vordefinierten Zeitdauern oder Zeitpunkte bestimmen, ob diese die Generatorheizung aktivieren oder Energie für Generatorheizungen anderer Windenergieanlagen zur Verfügung stellen müssen.

Gemäß einer weiteren Ausführungsform entsprechen die vordefinierten Zeitpunkte in jeder der Windenergieanlagen hinterlegten festen Tageszeiten, zu denen die Windenergieanlage im Leistungsbegrenzungsmodus, vorzugsweise nach Ablauf der Wartezeit, zwischen einem Betrieb und einem Heizen oder zwischen einem Heizen und einem Betrieb umgeschaltet wird. Ein Umschalten der Windenergieanlage ohne Ansteuerung durch einen externen übergeordneten Regler, wie einen Windparkregler, ist somit möglich und jede einzelne Windenergieanlage kann selbständig beim Empfangen eines vorgegebenen Sollwerts, der auf oder unterhalb dem Schwellenwert liegt, nach Aktivieren des Leistungsbegrenzungsmodus automatisch entscheiden, ob diese nun beheizt oder betrieben wird.

Gemäß einer weiteren Ausführungsform bleibt im Falle, dass der zeitliche Abstand zwischen dem Zeitpunkt, ab dem der Leistungsbegrenzungsmodus aktiviert wird, und dem nächsten bevorstehenden Zeitpunkt für den Wechsel vom Heiz- in den Betriebsmodus oder vom Betriebsmodus in den Heizmodus unterhalb einer Mindestdauer liegt, der beim nächsten bevorstehenden Zeitpunkt anstehende Wechsel unausgeführt.

Hierdurch wird gewährleistet, dass nicht bereits nach kurzzeitigem Aktivieren des Leistungsbegrenzungsmodus ein Wechsel vom Heiz- in den Betriebsmodus oder vom Betriebsmodus in den Heizmodus in den Anlagen stattfindet, obwohl zum Beispiel die Generatorheizungen in diesem kurzen Zeitraum, nämlich der Mindestdauer, noch gar keine Auswirkungen auf die Windenergieanlage im Hinblick auf eine Trocknung hatten und bereits wieder abgeschaltet werden. Die Mindestdauer ist vordefiniert und entspricht zum Beispiel einem Wert von 15 Minuten oder 30 Minuten.

Außerdem betrifft die Erfindung eine Windenergieanlage, insbesondere zum Ausführen eines Ausführungsbeispiels des Verfahrens. Die Windenergieanlage weist eine Windenergieanlagensteuerung auf, die eingerichtet ist, die Windenergieanlage zu betreiben, um die Generatorheizung einer anderen Windenergieanlage elektrisch zu versorgen und bei oder nach einem Auftreten eines vordefinierten Ereignisses, wie zum Beispiel nach Ablauf einer vordefinierten Zeitdauer oder nach Erreichen eines vordefinierten Zeitpunkts, die Windenergieanlage abzuschalten und die Generatorheizung der Windenergieanlage zu aktivieren.

Somit ist das Verfahren ohne eine Windparksteuerung umzusetzen. Die Anlagen organisieren das Verfahren demnach ohne die Windparksteuerung über ihre jeweilige Windenergieanlagensteuerung, vorzugsweise ausschließlich über Uhrzeit und eine Anlagennummer, selbst. Zwar kann ein Sollwert für die Leistung von extern vorgegeben werden, wobei jede Anlage vorzugsweise für sich selbst in den Leistungsbegrenzungsmodus wechseln kann, sobald die vorgegebene Maximalleistung am Leistungseingang der einzelnen Windenergieanlagen dauerhaft, zum Beispiel für mehr als zwei Stunden, unterhalb eines eingestellten Grenzwertes von zum Beispiel 1,5% liegt. Hierzu sind die Uhrzeiten der einzelnen Windenergieanlagen synchronisiert und im Parkverbund den Windenergieanlagen unterschiedliche Anlagennummern, zum Beispiel mit geraden und ungeraden Zahlen, zugeordnet. Eine Kommunikation zu einer übergeordneten Steuerung ist in diesem Fall nur optional.

Ferner betrifft die Erfindung einen Windpark zum Ausführen eines Verfahrens nach einer der vorgenannten Ausführungsformen. Der Windpark umfasst eine Windparksteuerung und/oder jede der Windenergieanlagen eine Windenergieanlagensteuerung, die eingerichtet sind, das Verfahren auszuführen.

Gemäß einer Ausführungsform weist die Windparksteuerung einen Dateneingang zum Anschluss einer Datenverbindung mit einem Netzbetreiber und zum Empfangen von Sollwerten auf. Außerdem betrifft die Erfindung eine Windenergieanlage zum Ausführen eines Verfahrens der vorgenannten Ausführungsformen.

Weitere Ausführungsformen der Erfindung ergeben sich aus den in den Figuren näher erläuterten Ausführungsbeispielen. Hierbei zeigt
- Fig. 1: eine Windenergieanlage,
- Fig. 2: einen Windpark und
- Fig. 3: ein Ausführungsbeispiel des Verfahrens.

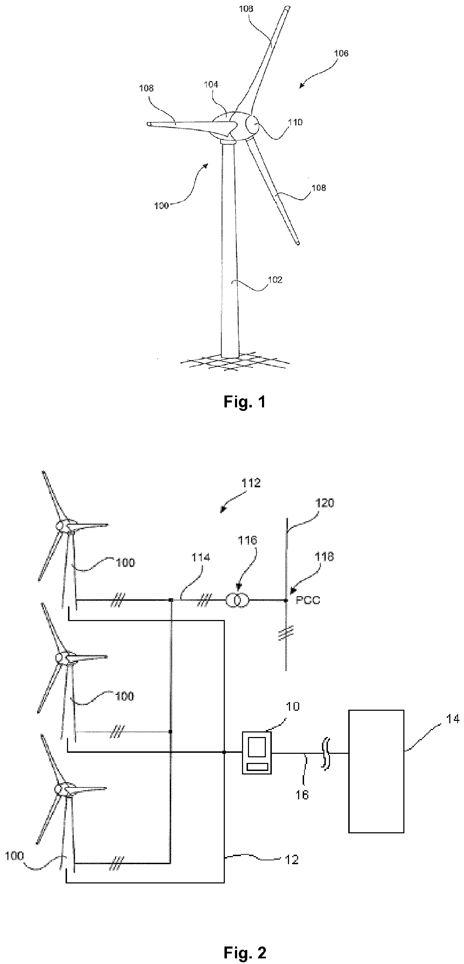

Fig. 1 zeigt eine schematische Darstellung einer Windenergieanlage 100, eines Windparks 112. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln der jeweiligen Rotorblätter 108 verändert werden.

Fig. 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen 100 eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park 112 hochtransformiert, um dann an dem Einspeisepunkt 118, der auch allgemein als PCC, Netzknoten oder Netzeinspeiseknoten bezeichnet wird, in das Versorgungsnetz 120 einzuspeisen. Fig. 2 ist nur eine vereinfachte Darstellung eines Windparks 112. Auch kann beispielsweise das Parknetz 114 anders gestaltet sein, in dem beispielsweise auch ein Transformator 116 am Ausgang jeder Windenergieanlage 100 vorhanden ist, um nur ein anderes Ausführungsbeispiel zu nennen.

Ferner zeigt Fig. 2 einen Regler 10, der hier ein Windparkregler 10 ist, der über ein Bussystem 12 mit jeder einzelnen Windenergieanlage 100 verbunden ist. Außerdem weist Fig. 2 eine Leitzentrale 14 eines Betreibers, nämlich eine Netzbetreibers oder eines Parkbetreibers, auf. Die Leitzentrale 14 ist mit einem Dateneingang 15 des Windparkreglers 10 über eine Verbindung 16 verbunden. Die Verbindung 16 entspricht zum Beispiel einer TCP/IP-Verbindung.

Jede der Windenergieanlagen 100 weist jeweils eine Generatorheizung auf, die nicht im Detail dargestellt ist. Die Generatorheizung umfasst den Generator der Windenergieanlage 100, der einen Stator und einen Läufer aufweist. Der Stator weist Anschlussklemmen auf, an welchen im Normalbetrieb die elektrische Energie abgegriffen werden kann. Der Läufer weist ebenfalls Anschlussklemmen auf, über welche der Erregerstrom zugeführt wird.

Zwischen den Anschlussklemmen des Stators ist ein Kontakt vorgesehen, der von einer Steuerungseinrichtung betätigt wird und die Stator-Anschlüsse kurzschließt. Zum Aktivieren der Generatorheizung, wird der Kontakt zwischen den Anschlussklemmen des Stators geschlossen und damit ein Kurzschluss herbeigeführt. Alternativ wird eine Aktivierung durch ein vollständiges Einschalten der Hochsetzsteller-IGBT's im Wechselrichter erreicht. Sodann wird ein vorgebbarer Erregerstrom in den Läufer über dessen Anschlussklemmen eingespeist. Durch die Höhe des in den Läufer eingespeisten Erregerstromes kann der in den Stator des Generators induzierte Strom, der durch Drehen des Enerators auftritt, beeinflusst werden. Wird der Stator kurzgeschlossen, ist die Stator-Spannung sehr klein und dabei fließt ein sehr hoher Strom (Kurzschlussstrom), der eine entsprechende Wärme im Stator entstehen lässt. Durch diese Wärme werden der Generator, die Gleichrichter und Wechselrichter insgesamt aufgeheizt, so dass die Feuchtigkeit bei aktivierter Generatorheizung im Inneren der Gondel 104 und des Turmes 102 verdunstet.

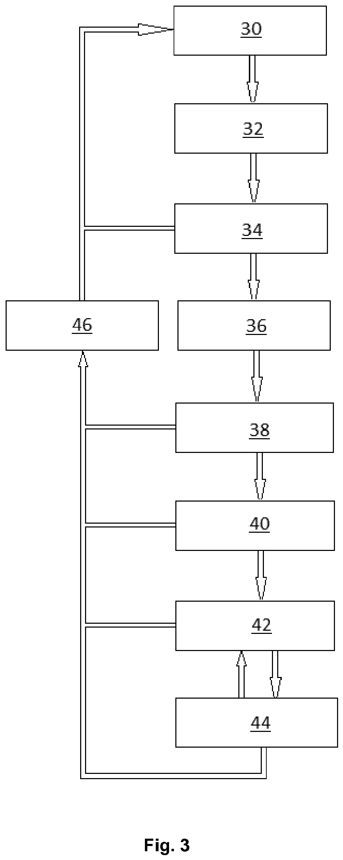

Fig. 3 zeigt den Ablauf eines Ausführungsbeispiels des Verfahrens. In einem Schritt 30 wird ein Sollwert, der auch Leistungssollwert genannt werden kann und der vom Netzbetreiber vorgegeben wird, überwacht. Im Schritt 32 wird detektiert, dass der Sollwert unterhalb einem Schwellenwert liegt, woraufhin im Schritt 34 eine Wartezeit abgewartet wird. Steigt der Sollwert innerhalb dieser Wartezeit wieder über den Schwellenwert, kehrt das Verfahren zurück zu Schritt 30 und überwacht wieder den Sollwert.

Im Falle, dass innerhalb der Wartezeit der Sollwert nicht wieder über den Schwellenwert tritt, so wird im Schritt 36 ein Leistungsbegrenzungsmodus aktiviert. Im Leistungsbegrenzungsmodus wird im Schritt 38 eine Generatorheizung mindestens einer Windenergieanlage 100 aktiviert und zusätzlich im Schritt 40 das Betreiben mindestens einer Windenergieanlage 100, deren Generatorheizung nicht aktiviert ist, aktiviert.

Daraufhin wird im Schritt 42 eine Zeitdauer abgewartet oder es wird bis zu einem Zeitpunkt gewartet. Ist die Zeitdauer abgelaufen oder der Zeitpunkt erreicht, wird dann im Schritt 44 ein Wechsel durchgeführt, sodass zumindest eine der Windenergieanlagen 100, die zuvor betrieben wurde, nun abgeschaltet und deren Generatorheizung aktiviert wird. Zur Versorgung der Generatorheizung wird wieder eine andere Windenergieanlage 100 verwendet. Solange der Sollwert unterhalb des Schwellenwerts liegt, werden die Schritte 42 und 44 im Wechsel ausgeführt. Übersteigt der Sollwert den Schwellenwert in einem beliebigen der Schritte 38 bis 44, wird die Leistungsbegrenzung in einem Schritt 46 abgeschaltet und der Sollwert erneut im Schritt 30 überwacht.

## Patentansprüche

1. Verfahren zum Betreiben von Windenergieanlagen (100), insbesondere eines Windparks (112), in einem Leistungsbegrenzungsmodus, wobei der Leistungsbegrenzungsmodus die folgenden Schritte umfasst:
- Abschalten mindestens einer der Windenergieanlagen (100) und Betreiben (40) mindestens einer von der abgeschalteten Windenergieanlage (100) unterschiedlichen Windenergieanlage (100),
- Aktivieren (38) einer Generatorheizung der abgeschalteten Windenergieanlage (100),
- Abschalten (44) der betriebenen Windenergieanlage (100) bei oder nach einem Auftreten eines vordefinierten Ereignisses und
- Aktivieren (44) der Generatorheizung der bei oder nach dem Auftreten des vordefinierten Ereignisses abgeschalteten Windenergieanlage (100).

2. Verfahren nach Anspruch 1, wobei das vordefinierte Ereignis ein Ablauf einer vordefinierten Zeitdauer, ein Erreichen eines vordefinierten Zeitpunkts oder mindestens ein vordefinierter Sensorwert mindestens eines vordefinierten Sensors ist, vorzugsweise mindestens eines Feuchtigkeitssensors und/oder mindestens eines Temperatursensors, der vorzugsweise im Bereich des Generators angeordnet ist.

3. Verfahren nach Anspruch 1 oder 2, wobei der Leistungsbegrenzungsmodus verzögert oder sofort ausgeführt wird, wenn Sollwertvorgaben für die einzuspeisende elektrische Leistung der durch den Windpark (112) bereitgestellten elektrischen Leistung auf oder unterhalb einem vordefinierten Schwellenwert liegen oder fallen, wobei der Schwellenwert vorzugsweise einem Wert von weniger als 5 % oder 2,5 % der Nennleistung des Windparks (112), vorzugsweise 0 KW, entspricht und/oder der Schwellenwert vorzugsweise vom Errichter und/oder Betreiber eingestellt wird und/oder in Abhängigkeit der vorherrschenden oder prognostizierten Wetterdaten automatisch eingestellt wird.

4. Verfahren nach einem der vorhergehenden Ansprüche, wobei im Leistungsbegrenzungsmodus ein Anteil oder die gesamte überschüssige Energie, nämlich elektrische Energie von der oder den betriebenen Windenergieanlagen (100), die nicht zum Versorgen einer oder mehrerer Generatorheizungen verbraucht wird, im Windpark (112), insbesondere mit einem zusätzlichen Verbraucher des Windparks (112), verbraucht wird.

5. Verfahren nach Anspruch 4, wobei für den Windpark (112) eine durch eine Sollwertvorgabe definierte Menge an elektrischer Energie für die einzuspeisende elektrische Leistung des Windparks (112) vorgegeben wird und die Menge an elektrischer Energie im Windpark (112), insbesondere mit einem zusätzlichen Verbraucher des Windparks (112), verbraucht wird, die dem Anteil der überschüssigen Energie entspricht, der oberhalb einer durch die Sollwertvorgabe definierten Menge liegt.

6. Verfahren nach Anspruch 4 oder 5, wobei ein Anteil oder die gesamte überschüssige Energie in einem Verbraucher verbraucht wird und der zusätzliche Verbraucher mindestens einen Aktor, zum Beispiel mindestens einen Rotorblattverstellantrieb oder mindestens einen Azimutantrieb, und/oder mindestens eine Heizvorrichtung, zum Beispiel mindestens eine Blattheizung, und/oder mindestens einen Akkumulator und/oder mindestens eine Chopperschaltung einer Windenergieanlage (100), die zum Beispiel in einem Zwischenkreis einer Windenergieanlage (100) angeordnet ist, und/oder mindestens einen Umrichter einer Windenergieanlage (100), die nicht betrieben wird, der gegenphasig zu mindestens einem Umrichter mindestens einer betriebenen Windenergieanlage (100) betrieben wird, umfasst.

7. Verfahren nach einem der vorhergehenden Ansprüche, wobei der Leistungsbegrenzungsmodus verzögert nach Ablauf einer vordefinierten Wartezeit ausgeführt wird (36), wobei die Wartezeit zu laufen beginnt, nachdem die Sollwertvorgaben für die einzuspeisende Leistung der durch den Windpark (112) bereitgestellten Energie auf oder unterhalb des vordefinierten Schwellenwerts fallen, wobei
die Wartezeit vorzugsweise 4 Stunden oder weniger als 4 Stunden, vorzugsweise 2 Stunden oder weniger als 2 Stunden, beträgt.

8. Verfahren nach einem der vorhergehenden Ansprüche, wobei die betriebene Windenergieanlage (100) oder die mehreren betriebenen Windenergieanlagen (100) im Leistungsbegrenzungsmodus eine Leistung von weniger als 5 %, insbesondere weniger als 2 %, zum Beispiel 1,5 %, 0,1 % oder 0 %, ihrer Nennleistung erzeugen.

9. Verfahren nach einem der vorhergehenden Ansprüche, wobei die aktivierte Generatorheizung der mindestens einen abgeschalteten Windenergieanlage (100) im Leistungsbegrenzungsmodus mit oder zumindest überwiegend mit der von der mindestens einen betriebenen Windenergieanlage (100) bereitgestellten Leistung desselben Windparks (112) versorgt wird.

10. Verfahren nach einem der vorhergehenden Ansprüche, wobei das Aktivieren (38) der Generatorheizung umfasst:
- das Kurzschließen des Generatorstators und
- das Beaufschlagen des Generatorläufers mit einem vorgebbaren Erregerstrom sowie vorzugsweise
- das Regeln des in den Stator induzierten Stromes auf einen vorgebbaren Heizstrom.

11. Verfahren nach einem der vorhergehenden Ansprüche, wobei im Leistungsbegrenzungsmodus während einem ersten Intervall der vordefinierten Zeitdauer oder bis zu einem der vordefinierten Zeitpunkte jede zweite Windenergieanlage (100) des Windparks (112) betrieben und/oder die übrigen Windenergieanlagen (100) mit der Generatorheizung beheizt werden und nach Ablauf der vordefinierten Zeitdauer oder nach dem Erreichen des einen der vordefinierten Zeitpunkte ein Wechsel (44) zwischen dem Betreiben und dem Heizen stattfindet, sodass die zuvor betriebenen Windenergieanlagen (100) mit der Generatorheizung beheizt werden und die zuvor mit der Generatorheizung beheizten Windenergieanlagen (100) betrieben werden und nach erneutem Ablauf der vordefinierten Zeitdauer oder nach dem Erreichen eines weiteren der vordefinierten Zeitpunkte ein erneuter Wechsel stattfindet, wobei der Wechsel zwischen dem Betreiben und dem Heizen so lange stattfindet, bis der Wert der Sollwertvorgabe über den vordefinierten Schwellenwert steigt.

12. Verfahren nach einem der vorhergehenden Ansprüche, wobei die vordefinierten Zeitpunkte in jeder der Windenergieanlagen (100) hinterlegten festen Tageszeiten entsprechen, zu denen die Windenergieanlage (100) im Leistungsbegrenzungsmodus, vorzugsweise nach Ablauf der Wartezeit, zwischen einem Betreiben und einem Beheizen oder zwischen einem Beheizen und einem Betreiben umgeschaltet wird.

13. Verfahren nach einem der vorhergehenden Ansprüche, wobei im Falle, dass der zeitliche Abstand zwischen dem Zeitpunkt, ab dem der Leistungsbegrenzungsmodus aktiviert wird, und dem nächsten bevorstehenden Zeitpunkt für den Wechsel (44) vom Heizmodus in den Betriebsmodus oder vom Betriebsmodus in den Heizmodus unterhalb einer Mindestdauer liegt, der beim nächsten bevorstehenden Zeitpunkt anstehende Wechsel (44) unausgeführt bleibt.

14. Windpark, zum Ausführen eines Verfahrens nach einem der Ansprüche 1 bis 13, wobei der Windpark (112) eine Windparksteuerung aufweist, die eingerichtet ist, mindestens eine Windenergieanlage (100) des Windparks (112) abzuschalten und mindestens eine von der abgeschalteten Windenergieanlage (100) unterschiedliche Windenergieanlage (100) des Windparks (112) zu betreiben, eine Generatorheizung der abgeschalteten Windenergieanlage (100) zu aktivieren (38), die betriebene Windenergieanlage (100) bei oder nach einem Auftreten eines vordefinierten Ereignisses abzuschalten und die Generatorheizung der bei oder nach dem Auftreten des vordefinierten Ereignisses abgeschalteten Windenergieanlage (100) zu aktivieren, wobei die Windparksteuerung vorzugsweise einen Dateneingang (15) zum Anschluss einer Datenverbindung (16) mit einem Netzbetreiber und/oder Betreiber und zum Empfangen von Sollwerten aufweist.

15. Windenergieanlage, zum Ausführen eines Verfahrens nach einem der Ansprüche 1 bis 13, wobei die Windenergieanlage (100) eine Windenergieanlagensteuerung aufweist, die eingerichtet ist, die Windenergieanlage (100) zu betreiben, um die Generatorheizung einer anderen Windenergieanlage (100) elektrisch zu versorgen und bei oder nach dem Auftreten eines vordefinierten Ereignisses die Windenergieanlage (100) abzuschalten und die Generatorheizung der Windenergieanlage (100) zu aktivieren.

## Claims

1. A method for operating wind energy converters (100), in particular of a wind farm (112), in a power limitation mode, wherein the power limitation mode comprises the following steps:
- turning off at least one of the wind energy converters (100) and operating (40) at least one wind energy converter (100) different to the turned-off wind energy converter (100),
- activating (38) a generator heating of the turned-off wind energy converter (100),
- turning off (44) the working wind energy converter (100) at or after occurrence of a predefined event, and
- activating (44) the generator heating of the wind energy converter (100) turned off at or after the occurrence of the predefined event.

2. The method as claimed in claim 1, wherein the predefined event is elapsing of a predefined time period, reaching of a predefined instant or at least one predefined sensor value of at least one predefined sensor, preferably of at least one humidity sensor and/or at least one temperature sensor, which is preferably arranged in the region of the generator.

3. The method as claimed in claim 1 or 2, wherein the power limitation mode is carried out with a delay or immediately when setpoint value specifications for the electrical power to be delivered for the electrical power provided by the wind farm (112) are equal to or fall below a predefined threshold value, wherein
the threshold value preferably corresponds to a value of less than 5% or 2.5% of the rated power of the wind farm (112), preferably 0 KW, and/or the threshold value preferably is adjusted by the installer and/or operator, and/or is adjusted automatically as a function of the prevailing or forecast weather data.

4. The method as claimed in one of the preceding claims, wherein, in the power limitation mode, a fraction or all of the surplus energy, namely electrical energy of the working wind energy converter or converters (100) which is not being consumed in order to supply one or more generator heating operations, is consumed in the wind farm (112), in particular with an additional load of the wind farm (112).

5. The method as claimed in claim 4, wherein an amount of electrical energy for the electrical power to be delivered by the wind farm (112), defined by a setpoint value specification, is specified for the wind farm (112), and the amount of electrical energy which corresponds to the fraction of the surplus energy which lies above an amount defined by the setpoint value specification is consumed in the wind farm (112), in particular with an additional load of the wind farm (112).

6. The method as claimed in claim 4 or 5, wherein a fraction or all of the surplus energy is consumed in a load, and the additional load comprises at least one actuator, for example at least one rotor blade adjustment drive or at least one azimuth drive, and/or at least one heating device, for example at least one blade heater, and/or at least one accumulator and/or at least one chopper circuit of a wind energy converter (100), which is for example arranged in an intermediate circuit of a wind energy converter (100), and/or at least one inverter of a wind energy converter (100), which is not being operated, which is operated in phase opposition to at least one inverter of at least one working wind energy converter (100).

7. The method as claimed in one of the preceding claims, wherein the power limitation mode is carried out (36) with a delay after a predefined waiting time has elapsed, the waiting time starting to run after the setpoint value specifications for the power to be delivered of the energy provided by the wind farm (112) fall to or below the predefined threshold value, wherein the waiting time preferably is 4 hours or less than 4 hours, preferably 2 hours or less than 2 hours.

8. The method as claimed in one of the preceding claims, wherein the working wind energy converter (100) or the plurality of working wind energy converters (100) in the power limitation mode generate a power of less than 5%, in particular less than 2%, for example 1.5%, 0.1% or 0% of its or their rated power.

9. The method as claimed in one of the preceding claims, wherein the activated generator heating of the at least one turned-off wind energy converter (100) in the power limitation mode is supplied with or at least predominantly with the power provided by the at least one working wind energy converter (100) of the same wind farm (112).

10. The method as claimed in one of the preceding claims, wherein the activation (38) of the generator heating comprises:
- short-circuiting of the generator stator,
- application of a predeterminable excitation current to the generator rotor, and preferably
- regulation of the current induced in the stator to a predeterminable heating current.

11. The method as claimed in one of the preceding claims, wherein, in the power limitation mode, during a first interval of the predefined time period or up to one of the predefined instants, every second wind energy converter (100) of the wind farm (112) is operated and/or the other wind energy converters (100) are heated with the generator heating, and after the predefined time period has elapsed or after the one of the predefined instants has been reached, a change (44) takes place between operation and heating, so that the previously working wind energy converters (100) are heated with the generator heating and the wind energy converters (100) previously heated with the generator heating are operated, and after the predefined time period has elapsed again or after a further one of the predefined instants has been reached, a new change takes place, the change between operation and heating taking place until the value of the setpoint value specification increases above the predefined threshold value.

12. The method as claimed in one of the preceding claims, wherein the predefined instants correspond to fixed times of day stored in each of the wind energy converters (100), at which the wind energy converter (100), in the power limitation mode, preferably after the waiting time has elapsed, is switched over between operation and heating or between heating and operation.

13. The method as claimed in one of the preceding claims, wherein, in the case in which the length of time between the instant from which the power limitation mode is activated and the next forthcoming instant for the change (44) from the heating mode to the operating mode or from the operating mode to the heating mode lies below a minimum duration, the change (44) due at the next forthcoming instant is not carried out.

14. A wind farm for carrying out a method as claimed in one of claims 1 to 13, wherein the wind farm (112) comprises a wind farm controller which is configured in order to turn off at least one wind energy converter (100) of the wind farm (112) and to operate at least one wind energy converter (100) of the wind farm (112), different to the turned-off wind energy converter (100), to activate (38) a generator heating of the turned-off wind energy converter (100), to turn off the working wind energy converter (100) at or after occurrence of a predefined event, and to activate the generator heating of the wind energy converter (100) turned off at or after the occurrence of the predefined event, wherein
the wind farm controller comprises preferably a data input (15) for connection of a data connection (16) to a grid operator and/or an operator and for receiving setpoint values.

15. A wind energy converter for carrying out a method as claimed in one of claims 1 to 13, wherein the wind energy converter (100) comprises a wind energy converter controller which is configured in order to operate the wind energy converter (100) in order to electrically supply the generator heating of another wind energy converter (100), and at or after the occurrence of a predefined event to turn off the wind energy converter (100) and to activate the generator heating of the wind energy converter (100).

## Revendications

1. Procédé de fonctionnement d'éoliennes (100), en particulier d'un parc éolien (112), dans un mode de limitation de puissance, dans lequel le mode de limitation de puissance comporte les étapes suivantes :
- l'arrêt d'au moins une des éoliennes (100) et le fonctionnement (40) d'au moins une éolienne (100) différente de l'éolienne (100) arrêtée,
- l'activation (38) d'un chauffage de générateur de l'éolienne (100) arrêtée,
- l'arrêt (44) de l'éolienne (100) en fonctionnement lors ou après une survenue d'un événement prédéfini et
- l'activation (44) du chauffage de générateur de l'éolienne (100) arrêtée lors ou après la survenue de l'événement prédéfini.

2. Procédé selon la revendication 1, dans lequel l'événement prédéfini est un écoulement d'une durée prédéfinie, une atteinte d'un moment prédéfini ou au moins une valeur de capteur prédéfinie au moins d'un capteur prédéfini, de préférence au moins un capteur d'humidité et/ou au moins un capteur de température, qui est agencé de préférence dans la zone du générateur.

3. Procédé selon la revendication 1 ou 2, dans lequel le mode de limitation de puissance est retardé ou réalisé immédiatement lorsque des prescriptions de valeur de consigne pour la puissance électrique à injecter de la puissance électrique mise à disposition par le parc éolien (112) se trouvent ou tombent à ou en dessous d'une valeur seuil prédéfinie, dans lequel
la valeur seuil correspond de préférence à une valeur de moins de 5 % ou 2,5 % de la puissance nominale du parc éolien (112), de préférence à 0 kW, et/ou la valeur seuil est réglée de préférence par l'installateur et/ou l'opérateur et/ou est automatiquement réglée en fonction des données météorologiques prédominantes ou pronostiquées.

4. Procédé selon l'une des revendications précédentes, dans lequel, dans le mode de limitation de puissance, une part ou l'énergie excédentaire entière, à savoir de l'énergie électrique est consommée par la ou les éoliennes (100) en fonctionnement qui n'est pas consommée pour l'alimentation d'un ou plusieurs chauffages de générateur, dans le parc éolien (112), en particulier avec un consommateur supplémentaire du parc éolien (112).

5. Procédé selon la revendication 4, dans lequel pour le parc éolien (112) une quantité définie par une prescription de valeur de consigne d'énergie électrique pour la puissance électrique à injecter du parc éolien (112) est prescrite, et la quantité d'énergie électrique dans le parc éolien (112), est consommée, en particulier avec un consommateur supplémentaire du parc éolien (112), qui correspond à la part de l'énergie excédentaire qui se trouve au-dessus d'une quantité définie par la prescription de valeur de consigne.

6. Procédé selon la revendication 4 ou 5, dans lequel une part ou l'énergie excédentaire entière est consommée dans un consommateur et le consommateur supplémentaire comporte au moins un actionneur, par exemple au moins un entraînement de réglage de pale de rotor ou au moins un entraînement azimutal, et/ou au moins un dispositif de chauffage, par exemple au moins un chauffage de pale, et/ou au moins un accumulateur et/ou au moins un circuit de découpage d'une éolienne (100) qui est agencé par exemple dans un cercle intermédiaire d'une éolienne (100), et/ou au moins un convertisseur d'une éolienne (100) qui n'est pas en fonctionnement, qui est en fonctionnement en opposition de phase à au moins un convertisseur au moins d'une éolienne (100) en fonctionnement.

7. Procédé selon l'une des revendications précédentes, dans lequel le mode de limitation de puissance est réalisé de manière retardée après écoulement d'un temps d'attente prédéfini (36) ; dans lequel le temps d'attente commence à s'écouler après que les prescriptions de valeur de consigne pour la puissance à injecter de l'énergie mise à disposition par le parc éolien (112) tombent à ou en dessous de la valeur seuil prédéfinie, dans lequel
le temps d'attente s'élève de préférence à 4 heures ou moins de 4 heures, de préférence 2 heures ou moins de 2 heures.

8. Procédé selon l'une des revendications précédentes, dans lequel l'éolienne (100) en fonctionnement ou les plusieurs éoliennes (100) en fonctionnement dans le mode de limitation de puissance génèrent une puissance de moins de 5 %, en particulier moins de 2 %, par exemple à 1,5 %, 0,1 % ou 0 % de leur puissance nominale.

9. Procédé selon l'une des revendications précédentes, dans lequel le chauffage de générateur activé d'au moins une éolienne (100) arrêtée dans le mode de limitation de puissance est alimenté avec ou au moins principalement avec la puissance mise à disposition par l'au moins une éolienne (100) en fonctionnement du même parc éolien (112).

10. Procédé selon l'une des revendications précédentes, dans lequel l'activation (38) du chauffage de générateur comporte :
- le court-circuitage du stator de générateur et
- la sollicitation du rotor de générateur avec un courant d'excitation prescriptible ainsi que de préférence
- la régulation du courant induit dans le stator à un courant de chauffage prescriptible.

11. Procédé selon l'une des revendications précédentes, dans lequel, dans le mode de limitation de puissance pendant un premier intervalle de la durée prédéfinie ou jusqu'à un des moments prédéfinis, une éolienne (100) sur deux du parc éolien (112) est en fonctionnement et/ou les éoliennes (100) restantes sont chauffées avec le chauffage de générateur et après écoulement de la durée prédéfinie ou après l'atteinte d'un des moments prédéfinis un changement (44) entre le fonctionnement et le chauffage a lieu de sorte que les éoliennes (100) précédemment en fonctionnement soient chauffées avec le chauffage de générateur et les éoliennes (100) chauffées précédemment avec le chauffage de générateur soient en fonctionnement et après le nouvel écoulement de la durée prédéfinie ou après l'atteinte d'un autre des moments prédéfinis un nouveau changement a lieu, dans lequel le changement entre le fonctionnement et le chauffage a lieu jusqu'à ce que la valeur de la prescription de valeur de consigne augmente au-dessus de la valeur seuil prédéfinie.

12. Procédé selon l'une des revendications précédentes, dans lequel, les moments prédéfinis dans chacune des éoliennes (100) correspondent à des heures fixes enregistrées, auxquelles l'éolienne (100) dans le mode de limitation de puissance, de préférence après écoulement du temps d'attente, est commutée entre un fonctionnement et un chauffage ou entre un chauffage et un fonctionnement.

13. Procédé selon l'une des revendications précédentes, dans lequel dans le cas où la distance temporelle entre le moment à partir duquel le mode de limitation de puissance est activé, et le prochain moment imminent pour le changement (44) du mode de chauffage dans le mode de fonctionnement ou du mode de fonctionnement dans le mode de chauffage se trouve en dessous d'une durée minimale, le changement (44) en suspens lors du prochain moment imminent reste non réalisé.

14. Parc éolien pour la réalisation d'un procédé selon l'une des revendications 1 à 13, dans lequel le parc éolien (112) présente une commande de parc éolien qui est aménagée afin d'arrêter au moins une éolienne (100) du parc éolien (112) et de faire fonctionner au moins une éolienne (100) différente de l'éolienne (100) arrêtée du parc éolien (112), d'activer (38) un chauffage de générateur de l'éolienne (100) arrêtée, d'arrêter l'éolienne (100) en fonctionnement lors ou après une survenue d'un événement prédéfini et d'activer le chauffage de générateur de l'éolienne (100) arrêtée lors ou après la survenue de l'événement prédéfini, dans lequel la commande de parc éolien présente de préférence une entrée de données (15) pour le raccordement d'une liaison de données (16) avec un exploitant de réseau et/ou l'opérateur et pour la réception de valeurs de consigne.

15. Eolienne pour la réalisation d'un procédé selon l'une des revendications 1 à 13, dans laquelle l'éolienne (100) présente une commande d'éolienne qui est aménagée afin de faire fonctionner l'éolienne (100), afin d'alimenter électriquement le chauffage de générateur d'une autre éolienne (100) et d'arrêter l'éolienne lors ou après la survenue d'un événement prédéfini et d'activer le chauffage de générateur de l'éolienne (100).
